Europäisches Patentamt

European Patent Office

Office européen des brevets

(11) Numéro de publication: **0 091 345 B1**

(19)

# FASCICULE DE BREVET EUROPEEN

(45) Date de publication du fascicule du brevet: **13.11.85**

(51) Int. Cl.⁴: **F 16 L 3/16**, F 16 L 3/10

(21) Numéro de dépôt: **83400611.6**

(22) Date de dépôt: **24.03.83**

(54) **Collier de serrage.**

(30) Priorité: **30.03.82 FR 8205371**

(43) Date de publication de la demande: **12.10.83 Bulletin 83/41**

(45) Mention de la délivrance du brevet: **13.11.85 Bulletin 85/46**

(84) Etats contractants désignés: **DE FR GB**

(56) Documents cités:
**BE - A - 646 198**
**CH - A - 246 072**
**CH - A - 562 980**
**FR - A - 2 376 319**
**GB - A - 709 838**
**US - A - 3 061 253**
**US - A - 3 815 855**
**US - A - 3 916 488**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Levant, Jean Maurice, 147, avenue de la Résistance, F-77350 Le Mee Sur Seine (FR)**

(74) Mandataire: **Molnat, François, S.N.E.C.M.A. Service des Brevets Boîte Postale 81, F-91003 Evry Cedex (FR)**

# Description

La présente invention concerne un collier de serrage, du type comprenant une bague intérieure fendue à alésage excentré, un demi-collier rigide intérieur entourant partiellement la bague intérieure et terminé d'un côté par une première patte de fixation, un demi-collier rigide extérieur recouvrant partiellement le demi-collier intérieur et terminé d'un côté par une seconde patte de fixation susceptible de venir en regard de la première patte de fixation, les deux pattes de fixation étant munies de trous oblongs de fixation en regard pour la fixation et le serrage du collier.

Des colliers de serrage du type précité ont déja été utilisés pour les canalisations rigides de turbo-machines par exemple. On préfère les canalisations rigides aux canalisations souples pour leurs meilleures performances mécaniques (surtout une meilleure tenue en température): cependant elles présentent l'inconvénient d'exiger une très grande précision de montage par rapport à leur implantation théorique, sous peine d'induire au niveau des colliers de serrage des contraintes dangereuses.

Il a été recherché dans ces conditions des colliers de serrage s'accommodant de certains écarts entre l'emplacement réel et l'emplacement théorique de la canalisation sans engendrer de contraintes. Le collier du type précité est un de ceux-là: s'il permet un certain réglage latéral, en revanche il n'admet aucun réglage angulaire et impose une partie droite le long de la canalisation qui n'est pas toujours identique à celles du tube, d'où il résulte une concentration de contraintes statiques.

Le but de l'invention est d'offrir un collier de serrage qui permet de monter une canalisation en rattrapant toutes les différences entre son implantation réelle et théorique, à l'intérieur de certaines limites bien sûr.

Le but de l'invention est atteint, dans le cadre d'un collier du type précité, par le fait que le demi-collier intérieur entoure la bague intérieure par l'intemédiaire d'une liaison à rotule.

La combinaison de cette caractéristique avec les autres donne au collier de serrage de l'invention la possibilité de s'adapter à toutes les situations et donc de ne subir aucune limitation à son utilisation puisqu'il rattrape aussi bien les variations angulaires que le désalignement latéral.

La solution conforme à l'invention autorise un montage sans contraintes statiques, et résout les problèmes de tolérance et de dilatation. Dans un domaine d'application particulièrement visé par l'invention, à savoir l'aéronautique, le problème de ne pas brider les tuyauteries non seulement en position mais aussi en direction est très délicat et de première importance pour la sécurité. L'invention apporte une contribution originale à la solution de ce problème.

Avantageusement, la liaison à rotule est réalisée par la périphérie sphérique donnée à la bague mobile en rotation dans un ou des patins à gorge liés au demi-collier intérieur.

D'autres caractéristiques et avantages de l'invention ressortiront de la description ci-après d'un mode de réalisation préféré de l'invention, faite en référence aux dessins annexés sur lesquels:
— la figure 1 est un coupe transversale du collier de l'invention, selon la ligne I-I de la figure 2.
— la figure 2 est une coupe radiale du collier de l'invention selon la ligne II-II de la figure 1.

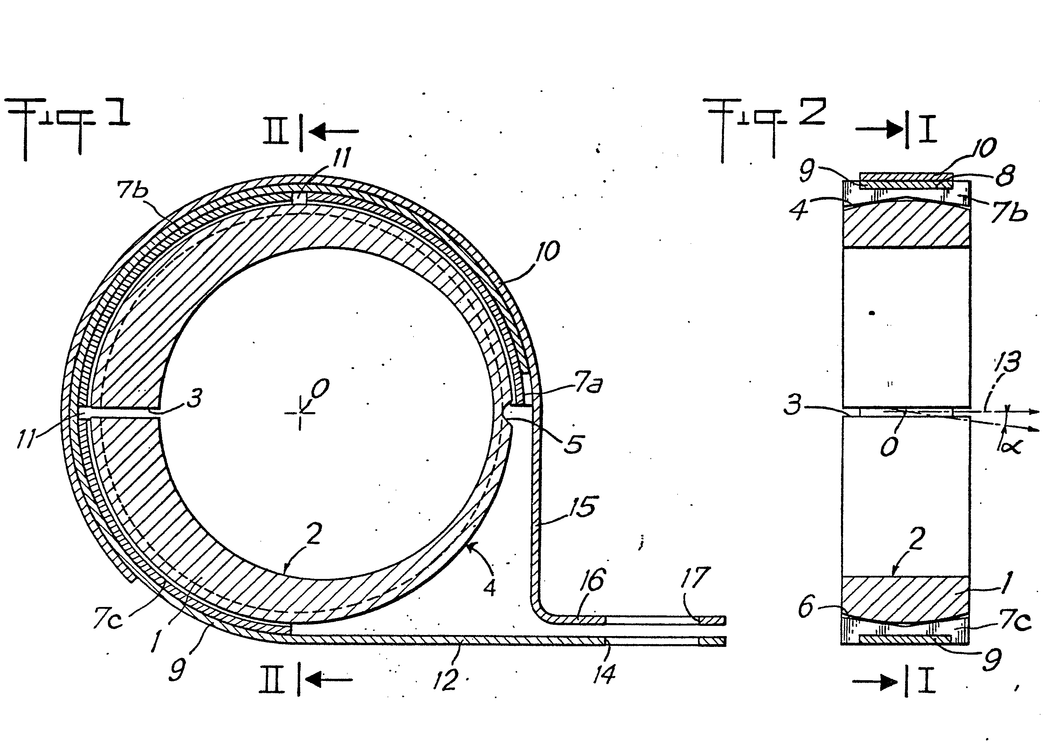

Les figures 1 et 2 montrent la bague intérieure 1 réalisée sous forme de couronne cylindrique à alésage cylindrique 2 excentré destiné à entourer un tube. La bague 1 est dotée dans sa partie la plus épaisse d'une fente radiale 3, permettant un serrage positif de la bague autour du tube.

Diamétralement opposé à la fente, est prévu un affaiblissement de la partie la plus mince de la bague.

La périphérie externe 4 de la bague affecte une forme sphérique centrée sur le centre 0 de la bague 1. L'affaiblissement de la bague 1 peut être réalisé par une encoche radiale 5 dans la profondeur de la partie sphérique de la bague.

La bague 1 peut se déplacer, selon le principe d'une articulation sphérique dans les gorges en V 6 de patins arqués 7 qui, dans la solution représentée, sont au nombre de trois 7a, 7b, 7c qui sont avantageusement réalisés, comme la bague elle-même, en polytétrafluoréthylène qui, en plus de ses qualités autolubrifiantes, résiste aux agents chimiques, est facilement formé et est de faible masse volumique. La bague présente d'autre part des qualités de déformabilité suffisantes pour permettre de la monter autour d'une canalisation équipée de ses raccords terminaux et/ou coudée.

Les trois patins sont des sections d'un corps de révolution, dont une section droite affecte la forme visible sur la figure 2 d'une sorte de rectangle dont le côté radialement intérieur est enfoncé en V et dont le côté radialement extérieur comporte une encoche, de manière à former sur le patin un rainure 8 de réception du demi-collier interne 9.

Les trois patins 7, chacun d'un développement angulaire de presque 90°, sont séparés par des interstices et peuvent être collés en position au demi-collier intérieur 9.

Le développement angulaire de la partie cylindrique du demi-collier intérieur 9 est d'environ 270°, cette partie se prolongeant tangentiellement par une patte de fixation 12 munie d'un trou de fixation oblong 14 (la plus petite dimension du trou étant parallèle à l'axe 13 e la bague).

Le demi-collier 9 est recouvert partiellement, sur environ 230°, par un demi-collier extérieur 10 qui se prolonge, du côté angulairement situé à l'opposé du côté d'où part la patte de fixation 12 de demi-collier intérieur 9, par un départ tangentiel 15 de patte de fixation, se retournant à angle droit pour former la patte de fixation proprement dite 16, muni d'un trou de fixtion oblong 17 semblable à et en regard du trou oblong 14.

Les demi-colliers 9 et 10 sont rigides, avec une élasticité suffisante pour les passer autour de la bague. Pour bénéficier du même coefficient de dilatation thermique, ils sont avantageusement réalisés dans le même matériau que les tubes qui doivent être équipés des colliers de serrage, par exemple en acier inoxydable.

Le collier de serrage de l'invention permet:

— grâce à son alésage excentré 2, un rattrapage du désalignement en hauteur d'un tube, parallèlement à l'axe théorique, dans les limites de l'excentration de l'alésage (par exemple 5 mm);

— grâce au trou de fixation oblong 14, 17, un rattrapage du désalignement latéral d'un tube, parallèlement à l'axe théorique, dans les limites de la longueur du trou (par exemple 5 mm);

— grâce à la combinaison des deux caractéristiques précédentes, un rattrapage d'un désalignement quelconque, parallèlement à l'axe théorique d'alignement du tube (dans un cercle de 5 mm de diamètre);

— grâce à la rotule 4, 7, un rattrapage de l'écart angulaire du tube par rapport à son axe théorique d'alignement, dans les limites de la nutation maximale $\alpha$ de l'articulation sphérique (par exemple 3°);

— grâce aux patins en forme de V, un guidage de la zone sphérique lors du serrage, les patins pouvant se déformer légèrement pour maintenir le tube.

Par conséquent, la combinaison de toutes les caractéristiques permet un rattrapage d'un défaut quelconque de position du tube.

Ce résultat est acquis sans préjudice de la tenue mécanique des composants du collier aux températures, aux sollicitations extérieures et aux agents chimiques.

Par ailleurs, le collier de l'invention présente un encombrement très réduit et un faible poids. Son montage et son démontage sont particulièrement aisés: il suffit, pour le monter, de mettre la bague fendue autour de la canalisation, de coiffer cette bague avec le demi-collier intérieur muni de ses patins, de mettre en place le demi-collier extérieur, de régler les différents éléments pour rattraper les écarts de position, et de serrer le tout.

L'invention n'est pas limitée bien entendu au mode de réalisation décrit ci-dessus. Elle englobe toutes les variantes de réalisation et de montage et notamment celles dans laquelle la bague fendue 1, les patins arqués 7, et les demi-colliers 9 et 10 sont glissés longitudinalement avant serrage des demi-colliers 9 et 10, et mis au voisinage de leur position finale avant formage des coudes et brasure et soudure des embouts.

## Revendications

1. Collier de serrage, du type comprenant une bague intérieure fendue (1) à alésage excentré (2), un demi-collier rigide intérieur (9) entourant partiellement la bague intérieure (1) et terminé d'un côté par une première patte de fixation (12), un demi-collier rigide extérieur (10) recouvrant partiellement le demi-collier intérieur (9) et terminé d'un côté par une seconde patte de fixation (16) susceptible de venir en regard de la première patte de fixation (12), les deux pattes de fixation (16, 12) étant munies de trous oblongs de fixation (14, 17) en regard pour la fixation et le serage du collier, caractérisé en ce que le demi-collier intérieur (9) entoure la bague intérieure (1) par l'intermédiaire d'une liaison à rotule (4, 7).

2. Collier selon la revendication 1, caractérisé en ce que la liaison à rotule (4, 7) est réalisée par la périphérie sphérique (4) donnée à la bague (1) mobile en rotation dans un ou des patins (7) à gorge (6) liés au demi-collier intérieur (9).

3. Collier selon la revendication 2, caractérisé en ce que les patins (7) ont une gorge (6) à section en V.

4. Collier selon l'une quelconque des revendications 2 ou 3, caractérisé en ce qu'il est prévu plusieurs patins (7) séparés angulairement par un interstice (11).

5. Collier selon la revendication 4, caractérisé en ce qu'il est prévu trois patins (7a, 7b, 7c) entourant la bague intérieure (1) sur sensiblement 270° qui correspondent sensiblement au développement angulaire du demi-collier intérieur (9).

6. Collier selon l'une quelconque des revendications 2 à 5, caractérisé en ce qu'au moins la périphérie de la bague intérieure (1) et les patins (7) sont réalisés en polytétrafluoréthylène.

7. Collier selon l'une quelconque des revendications 2 à 6, caractérisé en ce que les patins (7) comportent, sur leur côté radialement extérieur, une rainure (8) de réception du demi-collier interne (9).

8. Collier selon l'une quelconque des revendications 2 à 7, caractérisé en ce que les patins (7) sont collés au demi-collier interne (9).

9. Collier selon l'une quelconque des revendications 1 à 8, caractérisé en ce que la bague intérieure (1) comporte, diamétralement opposée à la fente (3), une encoche (5) d'affaiblissement de la bague (1).

10. Collier selon la revendication 9, caractérisé en ce que cette encoche (5) est réalisée dans la partie la plus mince de la bague (1).

## Patentansprüche

1. Klemmschelle
mit einem geschlitzten Innenring (1) mit einer exzentrischen Bohrung,
mit eine starren inneren Halbschelle (9), die den Innenring (1) teilweise umgibt und auf einer Seite in einer ersten Befestigungslasche (12) endet,
mit einer äußeren starren Halbschelle (10), die die innere Halbschelle (9) teilweise überdeckt und auf einer Seite in einer zweiten Befestigungslasche (16) endet, die mit der ersten Befestigungslasche (12) in Übereinstimmung bringbar ist,
wobei die beiden Befestigungslaschen (16, 12) mit einander gegenüberliegenden Befestigungslanglöchern (14, 17) zum Befestigen und zum Spannen der Klemmschelle versehen sind,
dadurch gekennzeichnet, daß die innere Halbschelle (9) den Innenring (1) unter Zwischenfügung einer Gelenkverbindung (4, 7) umgibt.

2. Klemmschelle nach Anspruch 1, dadurch gekennzeichnet, daß die Gelenkverbindung (4, 7) dadurch realisiert ist, daß der Innenring (1) mit einer sphärischen Umfangsfläche (4) ausgestattet und in einem oder mehreren mit einer Kehle (6) ausgestatteten Gleitstücken (7) drehbar ist, die mit der inneren Halbschelle (9) verbunden sind.

3. Klemmschelle nach Anspruch 2, dadurch gekennzeichnet, daß die Gleitstücke (7) eine Kehle (6) mit V-förmigem Querschnitt besitzen.

4. Klemmschelle nach einem der Ansprüche 2 oder 3, dadurch gekennzeichnet, daß mehrere Gleitstücke (7) vorgesehen sind, die jeweils durch einen Zwischenraum (11) in ihrer Winkellage voneinander getrennt sind.

5. Klemmschelle nach Anspruch 4, dadurch gekennzeichnet, daß drei der genannten Gleitstücke (7a, 7b, 7c) vorgesehen sind, die den Innenring (1) auf einer Winkellänge von etwa 270 Grad umgeben, wobei diese Winkellänge etwa der Winkelabwicklung der inneren Halbschelle (9) entspricht.

6. Klemmschelle nach einem der Ansprüche 2 bis 5, dadurch gekennzeichnet, daß zumindest der Umfang des Innenrings (1) und die genannten Gleitstücke (7) aus Polytetrafluoräthylen bestehen.

. 7. Klemmschelle nach einem der Ansprüche 2 bis 6, dadurch gekennzeichnet, daß die Gleitstücke (7) auf ihrer radial außenliegenden Seite eine Nut (8) zur Aufnahme der inneren Halbschelle (9) besitzen.

8. Klemmschelle nach einem der Ansprüche 2 bis 7, dadurch gekennzeichnet, daß die Gleitstücke (7) mit der inneren Halbschelle (9) verklebt sind.

9. Klemmschelle nach einem der Ansprüche 1 bis 8, dadurch gekennzeichnet, daß der Innenring (1) auf der dem Schlitz (3) diametral gegenüberliegenden Seite eine Schwächungskerbe (5) besitzt.

10. Klemmschelle nach Anspruch 9, dadurch gekennzeichnet, daß die genannte Schwächungskerbe (5) in dem dünnsten Teil des Innenrings (1) ausgebildet ist.

a second fixing lug (16) capable of facing the first fixing lug (12), both fixing lugs (16, 12) being provided with oblong fixing holes (14, 17) facing one another for tightening and clamping of the collar, characterised in that the inner half-collar (9) surrounds the inner ring (1) with a spherical seating (4, 7).

2. Collar according to claim 1, characterised in that the spherical seating (4, 7) is constituted by the spherical outer shape (4) given to the ring (1) rotatably movable in one or more grooved (6) seats (7) connected to the inner half-collar (9).

3. Collar according to claim 2, characterised in that the seats (7) have a V-section groove (6).

4. Collar according to any one of claims 2 or 3, characterised in that several seats (7) are provided, separated angularly by a gap (11).

5. Collar according to claim 4, characterised in that there are provided three seats (7a, 7b, 7c) surrounding the inner ring (1) over substantially 270° which corresponds substantially to the angular extent of the inner half-collar (9).

6. Collar according to any one of claims 2 to 5, characterised in that at least the outer surfaces of the inner ring (1) and of the seats (7) are made of polytetrafluorethylene.

7. Collar according to any one of claims 2 to 6, characterised in that the seats (7) have, on their radially external face, a groove (8) receiving the inner half-collar (9).

8. Collar according to any one of claims 2 to 7, characterised in that the seats (7) are adhered to the inner half-collar (9).

9. Collar according to any one of claims 1 to 8, characterised in that the inner ring (1) has, diametrically opposite the split (3), a notch (5) weakening the ring (1).

10. Collar according to claim 9, characterised in that said notch (5) is made in the thinnest part of the ring (1).

**Claims**

1. Clamping collar, of the type comprising an inner split ring (1) with eccentric bore (2), a rigid inner half-collar (9) partly surrounding the inner ring (1) and ending at one end in a first fixing lug (12), a rigid outer half-collar (10) partly covering the inner half-collar (9) and ending at one end in

Fig.1

Fig.2

0 091 345